# EUROPÄISCHE PATENTSCHRIFT

(11) **EP 3 083 249 B1**
(45) Veröffentlichungstag und Bekanntmachung des Hinweises auf die Patenterteilung: **20.10.2021**
(21) Anmeldenummer: 14835621.5
(22) Anmeldetag: 16.12.2014
(51) Int. Cl.: B32B 37/04, B32B 5/24, B29D 99/00, B29C 70/46, B29C 70/08, B29L 31/30

(54) **VERFAHREN ZUM HERSTELLEN EINES SANDWICHBAUTEILS**
METHOD FOR PRODUCING A SANDWICH COMPONENT
PROCÉDÉ DE PRODUCTION D'UN ÉLÉMENT SANDWICH

(30) Priorität: 17.12.2013 DE 102013021195; 26.04.2014 DE 102014006133; 15.07.2014 DE 102014010481; 15.07.2014 DE 102014010478
(43) Veröffentlichungstag der Anmeldung: 26.10.2016
(73) Patentinhaber: Daimler AG, 70372 Stuttgart (DE)
(72) Erfinder: BIEDER, Hubert, 73770 Denkendorf (DE); BLUMENSTOCK, Tobias, 70569 Stuttgart (DE); STAMP,Benno, 73760 Ostfildern (DE); WITTIG, Roman, 71106 Magstadt (DE)
(74) Vertreter: JENSEN & SON
(86) Internationale Anmeldenummer: PCT/EP2014/003386
(87) Internationale Veröffentlichungsnummer: WO 2015/090574

(56) Entgegenhaltungen:
- EP-A1- 0 393 476
- EP-A1- 2 503 040
- WO-A2-2005/016700
- DE-A1- 19 819 750
- DE-B3-102008 046 878
- US-A- 5 709 925

## Beschreibung

Die Erfindung betrifft ein Verfahren zum Herstellen eines Sandwichbauteils, insbesondere eines Innenverkleidungsbauteils für ein Kraftfahrzeug. Des Weiteren betrifft die Erfindung ein Sandwichbauteil, insbesondere ein Innenverkleidungsbauteil für einen Kraftwagen.

Derartige Sandwichbauteile aus mehrschichtigem Verbundwerkstoff wurden lange Zeit vor allem im Technologiesektor der Luft- und Raumfahrt eingesetzt und zeichnen sich vor allem durch ihr besonders geringes Gewicht und ihre richtungsabhängige Steifigkeit aus. So kann beispielsweise ein Sandwichbauteil in einer zu den einzelnen Lagen des Verbundwerkstoffs parallelen Richtung besonders großen Belastungen (zum Beispiel Zugbeanspruchung) widerstehen, wohingegen für eine Belastung senkrecht zu den Lagen des Kunststoffbauteils andere Belastungsgrenzen gelten. Mit anderen Worten wird also durch gezielten Einsatz verschiedener Werkstoffe (z. B. Wabenkern, laminierte Faserschicht) eine richtungsabhängige Bauteilsteifigkeit eingestellt und dabei in besonderem Maße an Gewicht gespart.

Zur Herstellung eines solchen Sandwichbauteils ist aus DE 43 23 590 A1 ein Verfahren bekannt, bei dem eine Kernschicht aus einem thermoplastischen Schaum und thermoplastischen Deckschichten gestapelt und in einem einzigen Heißpressvorgang zusammengefügt und zum Bauteil umgeformt werden. Die Deckschichten können dabei insbesondere aus thermoplastischem Glasfaser-Gewebe bestehen.

Die EP 2 503 040 A1 zeigt eine durch den Druck von Dampf geformte mehrschichtige Verkleidung zur Wärme und Schallisolation. Die erste Schicht ist eine gemischten Bahn aus einer Polyamidmatrix welche Pulver oder Fasern oder Flocken und Verstärkungsfasern umfaßt. Eine zweite Schicht besteht aus einer offenen Schaumschicht mit einer Wärmereflektionsschicht oder einer gemischten Bahn aus Polyamidmatrix welche auch Pulver oder Fasern oder Flocken beinhaltet. Durch den Druck des Dampfes werden die verschiedenen Schichten miteinander verbunden.

Die US 5,709,925 A betrifft einen Mehrschichtkörper, der als einstückiges sowie mehrlagiges Innenverkleidungsteil für Kraftfahrzeuge verwendbar ist und das eine als Träger dienende, flächige Trageschicht, eine weichelastische Zwischenschicht und eine Dekorschicht umfaßt. Der Kern der Erfindung besteht in der Verwendung von Naturfasern als Füllstoff in einer als Träger dienenden Trageschicht, wobei zusätzlich recycelbarer, thermoplastischer Kunststoff auch zugleich als Bindemittel verwendet wird.

Die EP 0 393 476 A1 beschreibt einen Formkörper für Fahrzeuge sowie ein Verfahren zu seiner Herstellung. Das Herstellverfahren geht von einem Halbzeug geschnitten aus Endlosmaterial aus. Dabei wird ein Kern aus Glasfasern und thermoplastischen Bindemitteln erhitzt und dann abgekühlt. Dabei wird ein sandwichartiges Verbundprofil gebildet, das wenigstens zwei äußere Schichten beinhaltet. Die Kernschicht beinhaltet Fasern Der Schaumstoff der Kernschicht kann angeschmolzen werden.

Die PCT-Anmeldung WO 2005/016700 A2 betrifft eine Fahrzeugpanelstruktur, die eine Kernschicht und eine aus einem Polypropylen-/Glasfasermaterial hergestellt Verstärkungsschicht einschließt, um der Fahrzeugpanelstruktur Maßhaltigkeit zu verleihen, wären die Dicke und das Gewicht der Fahrzeugpanelstruktur verringert wird. Dabei umfaßt die Verstärkungsschicht vermischte Stränge von Glasfasermaterial und Polymermaterialien bei dem die Verstärkungsschicht eine flächenbezogene Masse in einem Bereich zwischen 50 und 200 Gramm pro Quadratmeter besitzt.

Die deutsche Patentanmeldung DE 198 19 750 A1 beschreibt einen Verbundwerkstoff bestehend aus einem Partikelschaum aus expandiertem Polypropylen (EPP), einer Faserschicht und einer auf diese aufgebrachten Schicht aus einem aushärtbaren oder vernetzenden Polymer. Ein inniger Verbund ist dadurch gewährleistet, dass die Faserschicht eine Mischfaserschicht ist, die einen Anteil von Fasern aus Polypropylen (PP), das bei der Schmelztemperatur von PP mit den EPP-Partikeln verschweißbar ist, und einen weiteren Anteil von Verstärkungsfasern enthält, die eine ausreichende Benetzbarkeit für das aus der flüssigen Phase auf die freie Oberfläche der Faserschicht aufgebrachte aushärtbare oder vernetzende Polymer aufwiesen. Ferner ist ein Verfahren zur Herstellung dieses Verbundwerkstoffs beschrieben.

Im Automobilbereich werden vielfach gepresste oder gespritzte Verkleidungsteile verwendet, welche jedoch ein relativ hohes Flächengewicht aufweisen. Verkleidungsteile aus Pressteilen, zum Beispiel für Türinnenverkleidungen, bestehen beispielsweise aus Polypropylen-Naturfaservliesstoffen und weisen relativ niedrige Steifigkeiten auf. Des Weiteren gibt es auch Sandwichbauteile, beispielsweise aus Polyurethan-Materialien, welche jedoch relativ teuer sind und hohe Taktzeiten bei ihrer Herstellung aufweisen.

Aus DE 10 2012 006 609 A1 ist ein Verfahren bekannt, bei welchem eine Dekorlage auf zumindest eine Seite eines erwärmten Sandwichhalbzeugs sowie eine Schaumlage zwischen der Dekorlage und dem Sandwichhalbzeug vorgesehen ist. Das erwärmte Sandwichhalbzeug wird in eine gegebenenfalls vorgewärmte Formpresse überführt und derart in eine Formkavität eingelegt, dass die Seite des Sandwichhalbzeugs mit der Schaumlage und der Dekorlage die Sichtseite des Sandwichbauteils ausbildet. Mit anderen Worten wird also zur Herstellung dieses Sandwichbauteils zunächst das Sandwichhalbzeug (hier bestehend aus: Deckschichten und Papierwabenkern, sowie PP-Folien (Polypropylen-Folien) als Zwischenlage zur Deckschichtanbindung) in einer Heizpresse aufgeheizt, bis jeweilige thermoplastische Fasern der Deckschichten aufgeschmolzen sind. Im Anschluss daran werden die Schaumschicht und die Dekorlage auf dem Sandwichhalbzeug angeordnet, wobei eine gemeinsame Formgebung der Dekorlage, der Schaumschicht und des Sandwichhalbzeugs in einer Formpresse erfolgt. Während der Abkühlung der Sandwichmaterialien findet dabei die Verbindungsherstellung zwischen den Materialschichten statt. Das dortige Verfahren ermöglicht die kostengünstige Herstellung eines sogenannten kaschierten Sandwichbauteils, bei welchem etwaige Oberflächenfehler des Sandwichbauteils besonders wirksam vermieden werden, jedoch ein erhöhter Fertigungsaufwand betrieben werden muss.

Aufgabe der vorliegenden Erfindung ist es, ein Verfahren bereitzustellen, bei welchem ein Sandwichbauteil unter besonders geringem Aufwand hergestellt werden kann. Weiterhin ist es Aufgabe der vorliegenden Erfindung, ein besonders einfach herstellbares Sandwichbauteil bereitzustellen, welches bei plötzlich hoher mechanischer Belastung, beispielsweise bei einem Verkehrsunfall, als Verkleidungsteil nicht spröde bricht und dabei gefährliche scharfe Kanten entstehen, welche die Insassen von Kraftfahrzeugen verletzen könnten, sondern gewollt weich nachgiebig ausgestaltet ist.

Diese Aufgabe wird durch ein Verfahren mit den Merkmalen des Patentanspruchs 1 gelöst.

Das erfindungsgemäße Verfahren geht aus von einer Kernschicht aus einem geschäumten Kunststoff und einer Deckschicht, welche Verstärkungsfasern und Kunststofffasern umfasst. Dabei hat der Kunststoff der Kernschicht eine (erste) Schmelztemperatur, welche höher ist als die (zweite) Schmelztemperatur der Kunststofffasern der Deckschicht. Indem die Kernschicht an der Deckschicht angeordnet wird, wird ein Mehrlagenverbund geschaffen. Durch weitere Prozessschritte kann dieser Mehrlagenverbund zu einem Halbzeug weiterverarbeitet werden. Der Mehrlagenverbund oder das daraus gefertigte Halbzeug wird anschließend in einer Heizvorrichtung auf eine Temperatur erhitzt, welche niedriger ist als die erste Schmelztemperatur (der geschäumten Kernschicht), aber höher also die zweite Schmelztemperatur (der Kunststofffasern der Deckschicht). Anschließend wird der in dieser Weise erhitzte Mehrlagenverbund bzw. das in dieser Weise erhitzte Halbzeug in einem Umformwerkzeug umgeformt, um das Sandwichbauteil zu erzeugen.

Durch das erfindungsgemäße Verfahren und das zugehörige Materialsystem wird sichergestellt, dass die Kernschicht und die Deckschicht bei der Erwärmung des Mehrlagenverbunds keine wesentliche chemische Bindung eingehen, sondern dass stattdessen eine adhäsive, formschlüssige bzw. mechanische Verbindung zwischen der Kernschicht und der Deckschicht hergestellt wird. Dadurch, dass bei der Erwärmung des Mehrlagenverbunds eine Temperatur oberhalb der Schmelztemperatur der Deckschicht, aber unterhalb der Schmelztemperatur der Kernschicht gewählt wird, wird ausschließlich der Thermoplastanteil der Deckschicht aufgeschmolzen. Der geschäumte Kunststoff der Kernschicht hingegen schmilzt nicht und bleibt somit während der Verarbeitung nahezu stabil. Die heißen Deckschicht(en) des erhitztes Mehrlagenverbunds werden während der Umformung in dem Umformwerkzeug konsolidiert, ohne dass der heiße Schaum wesentlich zusammengedrückt wird. Die Formstabilität des heißen Schaums, die Umformbarkeit der Deckschicht(en) sowie der Gegendruck des heißen Schaums im Umformwerkzeug sind dabei ausreichend hoch, um die Konsolidierung der Deckschicht(en) zu erreichen.

Durch das erfindungsgemäße Verfahren ist es also möglich, dass der geschäumte Kunststoff der Kernschicht während des Herstellprozesses des Halbzeugs nahezu stabil bleibt und nicht in sich zusammenfällt. Ferner weist das derartig hergestellte Halbzeug besonders gute Umformeigenschaften auf.

Als Kernschicht wird vorteilhafterweise eine zumindest an ihrer Oberfläche offenporige Kernschicht verwendet. Mit anderen Worten weist die bereitgestellte Kernschicht einen offenporigen Schaum auf, oder zumindest die Oberfläche der bereitgestellten Kernschicht weist offene Poren bzw. eine raue, ungeschlossene Oberfläche auf. Letzteres kann z.B. bei der Herstellung von entsprechenden Schaumplatten, welche als Ausgangsmaterial für die Kernschicht dienen, durch Aussägen der Schaumplatten aus großen geschäumten Blöcken geschehen. Alternativ kann die Oberfläche einer geschlossenporigen Kernschicht durch Nadeln bzw. Anschleifen oder anderweitiges Aufrauen vorbehandelt werden.

Die Deckschicht umfasst vorteilhafterweise ein thermoplastisches faserverstärktes Textilgebilde, also ein Hybridtextil, wie z.B. ein Vliesstoff, ein Gewebe oder einem Gelege aus Verstärkungsfasern und thermoplastischen Fasern, die später die Matrix der Deckschicht bilden. Entsprechende Verstärkungsfasern können z.B. aus Glas-, Karbon-, Aramid-, Naturfasern oder dergleichen bestehen.

Besonders vorteilhaft ist die Verwendung unkonsolidierter Deckschichten aus Hybridtextilien, bestehend aus einer Verstärkungsfaser (z.B. Glas-, Natur-, Carbonfaser, etc.) und einer thermoplastischen Faser, die nach der Erhitzung/Umformung des Mehrlagenverbundes die Matrix bildet, denn unkonsolidierte Materialien weisen ein besseres Umformverhalten auf als konsolidierte. In diesem Fall erfolgt die Konsolidierung der Deckschicht erst im Umformwerkzeug/ Presswerkzeug, wo die heiße Deckschicht konsolidiert wird, ohne dass der heiße Schaum der Kernschicht wesentlich zusammengedrückt wird, und wo eine Imprägnierung der Verstärkungsfaser durch die aufgeschmolzenen Thermoplastfasern (vorzugsweise PP-Fasern) erfolgt. Da die Deckschicht also erst in dem Umformwerkzeug/ Presswerkzeug konsolidiert wird, kann durch den Schaumdruck und durch den Werkzeugspalt die Eigenschaften, insbesondere der Konsolidierungsgrad, der Deckschicht eingestellt werden. Hierbei kann beispielsweise eine niedrige Konsolidierung der Deckschicht zu einer Erhöhung der Steifigkeit des Sandwichbauteils führen, da die Dicke und das Flächenträgheitsmoment erhöht sind. Des Weiteren können durch eine niedrige Konsolidierung der Deckschichten Oberflächenfehler auf dem Bauteil, die sich beispielsweise durch inhomogene Vliesdeckschichten einstellen, vermieden werden. Die Formstabilität und somit der Gegendruck des heißen Schaums reicht dazu aus, die Deckschichten ausreichend zu konsolidieren. Ein weiterer Vorteil der Verwendung unkonsolidierter Halbzeuge besteht darin, dass sie wesentlich kostengünstiger sind.

Besonders vorteilhaft ist es, als Deckschicht einen Hybridvliesstoff/Hybridnadelvlies mit PP-Fasern zu verwenden, da dieser besonders gute Dehnungseigenschaften, hohe Materialisotropie, geringe Kosten sowie globale Verfügbarkeit aufweist. Aufgrund der hohen Dehnbarkeit eignet sich eine solche unkonsolidierte Vlies-Deckschicht besonders gut zum Umformen und zum Bilden einer dünnen Deckschicht auf der heißen, druckempfindlichen Schaum-Kernschicht. Wird hingegen ein Gewebe für die Deckschicht eingesetzt, so führt dies - aufgrund der deutlich niedrigeren Dehnungseigenschaft - zu einer stärkeren Belastung des Schaums bei der Umformung in Bereichen mit kleinen Radien, da hier der Schaum aufgrund der niedrigen Dehnungseigenschaft des Gewebes stark auf Druck belastet wird.

In einer vorteilhaften Weiterbildung der Erfindung umfasst die Deckschicht zusätzlich eine Schmelzschicht aus einem Thermoplast mit einer dritten Schmelztemperatur, welche niedriger als die erste Schmelztemperatur und maximal so hoch wie die zweite Schmelztemperatur ist. Bei dieser Schmelzschicht handelt es sich vorzugsweise um eine thermoplastische Folie, die Schmelzschicht kann aber auch durch eine lokale Thermoplastanreicherung oder Thermoplastbeschichtung der Deckschicht gebildet sein. Die Schmelzschicht besteht vorteilhafterweise aus demselben thermoplastischen Werkstoff wie der Thermoplastanteil der Deckschicht. Durch die Schmelzschicht kann die Deckschichtanbindung an die Kernschicht verbessert und die Kernschicht selbst vor Feuchtigkeit geschützt werden. Bei der Bildung des Mehrlagenverbunds wird die Schmelzschicht zwischen der Kernschicht und den Fasern der Deckschicht angeordnet. Bei der Erwärmung des Mehrlagenverbunds auf eine Temperatur oberhalb der Schmelztemperatur der Schmelzschicht, aber unterhalb der Schmelztemperatur der Kernschicht, wird die Schmelzschicht (und evtl. ein Thermoplastanteil der Deckschicht) aufgeschmolzen. Das aufgeschmolzene thermoplastische Material der Schmelzschicht dringt dabei in offene Poren des geschäumten Kunststoffs der Kernschicht hinein und bildet somit eine mechanische und Verankerung und/oder adhäsive Bindung zur Kernschicht. Mit der Deckschicht verbindet sich der aufgeschmolzene Thermoplast der Schmelzschicht entweder durch mechanische Verankerung im betreffenden Faservlies der Deckschicht oder mit dem ebenfalls aufgeschmolzenen Thermoplastanteil der Deckschicht.

In einer besonders vorteilhaften Ausgestaltung der Erfindung ist es vorgesehen, dass die Schmelzschicht und die Kunststofffasern der Deckschicht aus Polypropylen (PP) bestehen. Polypropylen besitzt einen Schmelzpunkt von ca. 160°C, wohingegen Polyethylenterephthalat erst ab ca. 250°C schmilzt. Dadurch kann sichergestellt werden, dass die jeweiligen Schmelztemperaturen der Schmelzschicht und der Fasern der Deckschicht sowie der Kernschicht weit genug auseinander liegen, so dass eine zuverlässige Verfahrensführung beim Erwärmen des Mehrlagenverbunds sichergestellt werden kann. Ferner sind Polypropylen und Polyethylenterephthalat relativ günstige Ausgangsstoffe, welche sich zudem kostengünstig zu einem Materialverbund verbinden lassen, ohne dass sie untereinander eine chemische Bindung eingehen.

Gemäß einer weiteren vorteilhaften Ausführungsform der Erfindung ist es vorgesehen, dass eine Zusatzschicht mit einer vierten Schmelztemperatur, welche höher als die zweite Schmelztemperatur ist, unter Ausbildung des Mehrlagenverbunds an der Deckschicht angeordnet wird. Die Zusatzschicht kann beispielsweise aus PES oder Polyamid (PA) hergestellt sein. Dadurch, dass die Zusatzschicht eine Schmelztemperatur aufweist, welche höher als die zweite Schmelztemperatur ist, kann eine Anhaftung des Mehrlagenverbundes an der Heizvorrichtung verhindert werden, in welcher der Mehrlagenverbund bei der Herstellung des Sandwichbauteils erhitzt wird.

Eine weitere vorteilhafte Ausgestaltungsform der Erfindung sieht vor, dass eine Dekorschicht, insbesondere zusammen mit einer weiteren Schmelzschicht aus dem selben Thermoplasten wie die andere Schmelzschicht, unter Ausbildung des Mehrlagenverbunds an der Deckschicht angeordnet wird.

Das Handling des so hergestellten Halbzeugs unterscheidet sich daher kaum von einem einschichtigen Werkstoff, z.B. von einem Vlies, und besitzt darüber hinaus eine sehr hohe Flexibilität. Hersteller von gepressten, gespritzten oder hinterspritzten Bauteilen, bei welchen ein derartiges Halbzeug verwendet wird, müssen daher nicht mehr über teils sehr aufwändige Sortiereinrichtungen verfügen, um entsprechende Sandwichbauteile aus dem erfindungsgemäß hergestellten Halbzeug herstellen zu können. Die Halbzeugherstellung, insbesondere die Anordnung der einzelnen Lagen eines Sandwichbauteils, kann somit von der eigentlichen Herstellung des Sandwichbauteils (durch Aufheizen und Umformen) entkoppelt werden. Auf diese Weise ist es möglich, die Herstellung des Halbzeugs für ein Faserverbundbauteil von dem eigentlichen Herstellprozess des Sandwichbauteils zeitlich und/oder örtlich zu entkoppeln. Durch das teilweise Verbinden der Einzelschichten zu einem vorkonfektionierten Mehrlagenverbund ist das mit Hilfe des erfindungsgemäßen Verfahrens hergestellte Halbzeug lager- und transportierbar; das Halbzeug kann also beispielsweise bei einem Halbzeugproduzenten (z.B. einem Schaumstoffhersteller oder Vliesstoffhersteller) gesondert hergestellt und anschließend zu einem Bauteilproduzenten transportiert werden, der aus dem Halbzeug Sandwichbauteile herstellt. Auf diese Weise kann eine deutliche Vereinfachung des Herstellprozesses des Sandwichbauteils, der der Halbzeugherstellung nachgeschaltet ist, erzielt werden kann. Dadurch kann insbesondere die Bauteilqualität erhöht und die Durchlaufzeit während der Bauteilfertigung reduziert werden. Des Weiteren kann die Halbzeugherstellung und -lagerung an einen Halbzeugproduzenten ausgelagert werden, wodurch beim Bauteilhersteller Anlageninvestitionen reduziert werden können.

Alternativ kann das Halbzeug unmittelbar, also ohne Zwischenlagerung, dem Verarbeitungsprozess zugeführt werden, mittels welchem das Sandwichbauteil hergestellt wird. In diesem Fall wird die Herstellung des Halbzeugs direkt an die Herstellung des Sandwichbauteils gekoppelt, ohne dass das Halbzeug zwischengelagert wird.

Das Halbzeug kann in Form eines Endlosmaterials hergestellt und in Rollenform angeordnet oder zu Halbzeugeinzelteilen konfektioniert werden.

Nach dem Verbinden der Schichten zur Erzeugung des Halbzeugs erfolgt zweckmäßigerweise in einem weiteren Schritt ein Aufrollen des Halbzeugs zu wenigstens einer Halbzeugrolle und/oder ein Konfektionieren des Halbzeugs in mehrere Einzelteile sowie die Bildung wenigstens eines Einzelteilstapels aus den Einzelteilen. In einem weiteren Verfahrensschritt erfolgt eine Bereitstellung des Halbzeugs an der Endfertigungsvorrichtung unter Abrollen der wenigstens einen Halbzeugrolle und Unterteilen des abgerollten Halbzeugs in mehrere Abrollteile und/oder Entstapeln der Einzelteile des wenigstens einen Einzelteilstapels. Danach wird aus wenigstens einem Abrollteil und/oder aus wenigstens einem Einzelteil in der Endfertigungsvorrichtung durch Erhitzung und Umformung das fertige Sandwichbauteil hergestellt.

Das aus der Kernschicht sowie der wenigstens einen Deckschicht hergestellte Halbzeug wird also entweder zu der Halbzeugrolle aufgerollt und zusätzlich oder alternativ in die Einzelteile, welche auch als Platinen bezeichnet werden, zerteilt und zu dem Einzelteilstapel aufgestapelt. Das derart hergestellte Halbzeug umfasst bereits alle gewünschten Schichten des Kunststoffbauteils, wobei zusätzlich zum Beispiel auch eine Dekorschicht vorgesehen sein kann, welche dem Bauteilhalbzeug und damit dem daraus gebildeten Kunststoffbauteil eine besonders hohe Wertanmutung verleiht. Diese Dekorschicht kann zur Schonung des Materials auch erst nach dem Aufheizen des Halbzeugs hinzugefügt werden. Je nachdem, ob das Halbzeug zu der Halbzeugrolle aufgerollt wird oder bereits in die mehreren Einzelteile mit gewünschter Länge unterteilt und somit konfektioniert ist, wird das Halbzeug in der Endfertigungsvorrichtung nur noch abgerollt und das abgerollte Halbzeug in die Abrollteile mit wunschgemäßer Länge unterteilt bzw. die Einzelteile, welche bereits durch das Konfektionieren eine wunschgemäße Länge aufweisen von dem Einzelteilstapel entstapelt. Dementsprechend müssen dem Halbzeug in der Endfertigungsvorrichtung keine weiteren Schichten hinzugefügt werden, sondern das wenigstens eine Abrollteil (der Halbzeugrolle) bzw. das wenigstens eine Einzelteil (des Einzelteilstapels) wird lediglich der oben beschriebenen Erhitzung und Umformung unterzogen, um das Sandwichbauteil aus dem Halbzeug herzustellen.

Das Sortieren der einzelnen Lagen (hier: Kernschicht, Deckschicht und evtl. Zusatz- und/oder Dekorschicht) des Sandwichbauteils ist somit nicht an den weiteren Verarbeitungsprozess gekoppelt. Mit anderen Worten kann also die Herstellung des Halbzeugs in der Vorfertigungsvorrichtung erfolgen und das Halbzeug dementsprechend als Halbzeugrolle bzw. Einzelteilstapel zu der Endfertigungsvorrichtung transportiert werden. Die Endfertigungsvorrichtung kann dementsprechend besonders einfach ausgebildet sein, da keine weiteren Werkzeuge zum zusätzlichen Anbringen weiterer Schichten auf das Halbzeug vorzusehen sind. Die einzelnen Sandwichlagen können also im Vorfeld, also in der Vorfertigungsvorrichtung, zu dem Halbzeug verarbeitet werden, wobei in der Endfertigungsvorrichtung lediglich die Erwärmung und Umformung des Halbzeugs erfolgt. Dadurch ist es möglich, die Herstellung des Halbzeugs für ein Faserverbundbauteil von dem eigentlichen Herstellprozess des Faserverbundbauteils zeitlich und/oder örtlich zu entkoppeln.

Vorteilhafterweise werden zur Herstellung des Halbzeugs die Kernschicht und die Deckschicht (und ggf. weitere Schichten) durch Verwendung von Wärme verbunden; dies erfolgt in einer Vorfertigungsvorrichtung, die sich beim Hersteller des Sandwichbauteils, alternativ aber auch bei einem Zulieferer befinden kann.

In einer vorteilhaften Ausgestaltung der Halbzeugherstellung werden die Schichten des Mehrlagenverbunds durch lokales Aufschmelzen der Deckschicht verbunden, und die auf diese Weise teilweise verbundenen Schichten des Mehrlagenverbunds werden anschließend zu dem Halbzeug vorkonfektioniert. Alternativ kann die Deckschicht vollflächig mit der Schaumstoffkernschicht verbunden werden; in diesem Fall wird statt einer nur lokalen Aufwärmung und Aufschmelzung des thermoplastischen Kunststoffs der Deckschicht diese vollflächig aufgeschmolzen und so auch vollflächig mit der Schaumstoffkernschicht verbunden.

Insbesondere ist es vorteilhaft, die Schichten des Mehrlagenverbunds kontinuierlich mittels eines beheizten Walzbands oder einer beheizten Rollenpresse miteinander zu verbinden. Dadurch kann eine besonders hohe Ausbringungsleistung bei der Herstellung des Halbzeugs erzielt werden. Das Halbzeug wird dabei in Form eines Endlosmaterials hergestellt und kann beispielsweise auf einer Rolle aufgerollt werden.

Alternativ können die Schichten des Mehrlagenverbunds diskontinuierlich mittels eines beheizten Presswerkzeugs miteinander verbunden werden. Mit anderen Worten wird also eine stationär beheizte Presseneinheit eingesetzt, wobei in diesem Fall das Halbzeug direkt vorkonsolidiert wird und beispielsweise in Form von Zuschnitten oder dergleichen bereitgestellt werden kann. Alternativ können die Schichten des aufgeheizten Mehrlagenverbunds diskontinuierlich mittels eines kalten Presswerkzeugs miteinander verbunden werden.

An dem Halbzeug können mehrere Konsolidierungsflächen ausgebildet werden, an welchen der Querschnitt des Halbzeugs lokal stärker verpresst ist, als von den Konsolidierungsflächen verschiedene Bereiche.

Alternativ zu dem thermischen Verbinden der Schichten des Mehrlagenverbunds zur Herstellung des Halbzeugs können die Schichten des Mehrlagenverbunds auch mechanisch, insbesondere durch Vernadeln, miteinander verbunden werden. Dies empfiehlt sich insbesondere dann, wenn die Deckschicht einen Faserflor und/oder Faservlies umfasst; weiterhin umfasst die Deckschicht vorteilhafterweise auch eine Schmelzschicht aus einem thermoplastischen Kunststoff. Faserflor und Kernschicht werden dann verbunden durch Einstechen zumindest einer einen Widerhaken aufweisenden Nadel in die Kernschicht und den Faserflor und anschließendes Herausführen der Nadel aus der Kernschicht und dem Faserflor. Dabei werden beim Einstechen und/oder Herausziehen der Nadel einzelne oder mehrere Fasern des Faserflors und/oder Faservlieses mit dem Widerhaken verhakt und beim Einstechen und/oder Herausführen der Nadel mechanisch mit der Kernschicht verankert. Alternativ bzw. zusätzlich kann die Nadel zuerst den Faserflor/Faservlies und erst dann die Kernlage durchstechen, so dass die Nadel bereits beim Einstechen Fasern durch die Kernlage schiebt, was eine mechanische Verankerung der Kernlage mit dem Faserflor/Faservlies bewirkt.

In einem vorgelagerten Verfahrensschritt kann zunächst ein Fasergemisch bereitgestellt werden, welches die Thermoplastfasern und die Verstärkungsfasern umfasst. Anschließend kann diese üblicherweise noch inhomogene Fasermischung durch Krempeln zu dem Faserflor verarbeitet werden. Weiterhin kann eine Zusatzschicht, also eine Oberlage, aus einem Werkstoff mit einer höheren Schmelztemperatur als die der Thermoplastfasern an dem Faserflor angeordnet werden. Diese Zusatzschicht kann insbesondere aus einem Polyester, Polyamid oder aus einem Glaswerkstoff bestehen und bewirkt, dass Anhaftungen an einer Oberfläche einer zum Aufheizen des Halbzeugs dienenden Heizvorrichtung vermieden werden.

Nach Herstellung des Sandwichbauteils durch Erhitzen und Umformen des Mehrlagenverbunds bzw. des Halbzeugs kann einem weiteren Prozessschritt an dem in dieser Weise hergestellten Sandwichbauteil wenigstens ein Kunststoffelement fixiert werden. Das Kunststoffelement kann insbesondere ein Versteifungselement sein. Derartige Versteifungselemente können beispielsweise durch angespritzte bzw. angeklebte Rippen, sowie durch andere Materialanhäufungen oder Sicken bzw. Einsenkungen an dem Kunststoffbauteil realisiert werden. Somit besteht die Möglichkeit einer zusätzlichen und besonders anforderungsgerechten, lokalen Versteifung des Sandwichbauteils mittels derartiger Versteifungselemente und Verbindungselemente zu benachbarten Bauteilen.

Alternativ kann mittels desselben Werkzeugs, in einem derartigen Fall mittels eines kombinierten Spritzpresswerkzeugs, nach dem Umformen des Halbzeugs zumindest ein Element an dieses angespritzt wird. Mit anderen Worten können optional also eine oder mehrere als Verstärkungselemente dienende Kunststoffbauteile bzw. -elemente im Umformwerkzeug an das Halbzeug angespritzt werden. Das Spritzgussmaterial kann dabei Füll- oder auch Verstärkungsmaterialien enthalten. Dadurch kann auf einfache Weise ein Pressvorgang mit einem Spritzvorgang bei der Herstellung des Sandwichbauteils kombiniert werden. Während der Herstellung des Sandwichbauteils kann dieses somit bis zu seiner Fertigstellung in ein und demselben Werkzeug verbleiben. Aufwendige Handlingaufgaben während der Herstellung des Sandwichbauteils können infolgedessen unterbleiben, sodass das Sandwichbauteil besonders aufwandsarm und schnell hergestellt werden kann.

Im Vergleich zu gepressten Bauteilen weist das erfindungsgemäße Sandwichbauteil ein besonders geringes spezifisches Gewicht auf. Des Weiteren kann dieses besonders kostengünstig und effizient hergestellt werden, da das besagte Halbzeug zur Herstellung des Sandwichbauteils genutzt wird. Darüber hinaus kann das Sandwichbauteil zu einem gewissen Anteil Recyclingmaterialien umfassen, wodurch eine besonders gute Ökobilanz realisierbar ist.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Ausführungsbeispiele der Erfindung werden nachfolgend anhand schematischer Zeichnungen näher erläutert. Es zeigen:
- Fig. 1a: ein Diagramm einer ersten Verfahrensabfolge zum Herstellen eines Sandwichbauteils, bei der ein Mehrlagenverbund aus einer geschäumten Kernschicht und einer Deckschicht in einer Heizvorrichtung erhitzt und in einem Umformwerkzeug umgeformt wird;
- Fig. 1b: ein Diagramm einer alternativen Verfahrensabfolge zum Herstellen eines Sandwichbauteils, bei der aus einem Mehrlagenverbund aus einer geschäumten Kernschicht und einer Deckschicht zunächst ein Halbzeug hergestellt wird, das anschließend in einer Heizvorrichtung erhitzt und in einem Umformwerkzeug umgeformt wird;
- Fig. 2a: eine schematische Darstellung der Verfahrensabfolge der Fig. 1a;
- Fig. 2b: eine schematische Darstellung einer alternativen Ausgestaltung der Verfahrensabfolge der Fig. 1a;
- Fig. 3a - 3d: schematische Schnittdarstellungen unterschiedlicher Ausgestaltungen der Deckschicht;
- Fig. 4a: eine schematische Darstellung einer Halbzeugherstellung gemäß der Verfahrensabfolge der Fig. 1b;
- Fig. 4b: eine schematische Darstellung einer alternativen Ausgestaltung der Halbzeugherstellung gemäß Verfahrensabfolge 1b;
- Fig. 5a: eine schematische Seitenschnittansicht eines Halbzeugs, welches zum Teil stärker und zum Teil schwächer konsolidierte Bereiche aufweist;
- Fig. 5b: eine schematische Seitenschnittansicht einer alternativen Ausführungsform des Halbzeugs;
- Fig. 5c: eine schematische Draufsicht auf einer weiteren alternativen Ausführungsform des Halbzeugs;
- Fig. 6a: eine schematische Darstellung einer alternativen Verfahrensabfolge zum Herstellen eines Halbzeugs für ein Sandwichbauteil, wobei mittels eines Thermoplastfasern und Verstärkungsfasern umfassenden Faserflors sowie mittels einer einen geschäumten Kunststoff umfassenden Kernschicht sowie einer thermoplastischen Schmelzschicht das Halbzeug in Form eines Endlosmaterials hergestellt und auf einer Rolle aufgerollt wird;
- Fig. 6b: eine schematische Darstellung einer alternativen Verfahrensabfolge zur Herstellung des Halbzeugs, bei welcher das als Endlosmaterial hergestellte Halbzeug zu Halbzeugeinzelteilen konfektioniert wird;
- Fig. 6c: eine schematische Darstellung einer weiteren alternativen Verfahrensabfolge zur Herstellung des Halbzeugs;
- Fig. 7a: eine schematische Detailansicht des Halbzeugs während dessen Herstellung, wobei eine Mehrzahl von mit Widerhaken versehenen Nadeln durch jeweilige Lagen des Halbzeugs hindurchgeführt und aus diesen wieder herausgezogen werden;
- Fig. 7b: eine weitere schematische Detailansicht des Halbzeugs, wobei dieses einen anderen Lagenaufbau als in der in Fig. 7a gezeigten Ausführungsform aufweist;
- Fig. 8a: eine schematische Darstellung einer Verfahrensabfolge zur Herstellung eines Sandwichbauteils, wobei eine Aufheizanlage zum Aufheizen des Halbzeugs und ein Werkzeug zum Herstellen eines Sandwichbauteils aus dem aufgeheizten Halbzeug gezeigt sind, und
- Fig. 8b: eine schematische Darstellung einer alternativen Verfahrensabfolge zur Herstellung eines Sandwichbauteils, wobei während der Herstellung des Sandwichbauteils an das Halbzeug mehrere Elemente aus Kunststoff angespritzt werden.

In den Figuren werden gleiche oder funktionsgleiche Elemente mit gleichen Bezugszeichen versehen.

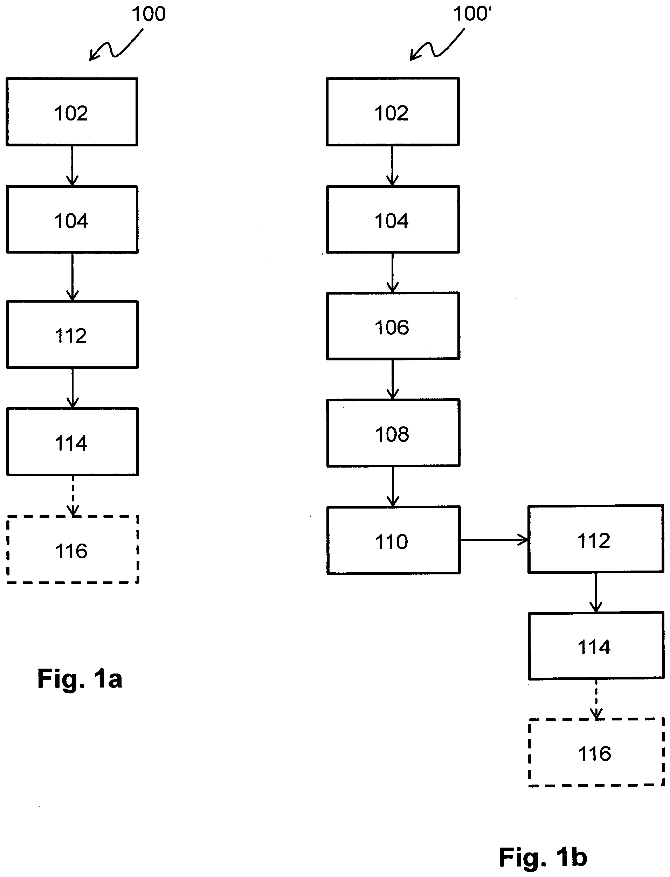

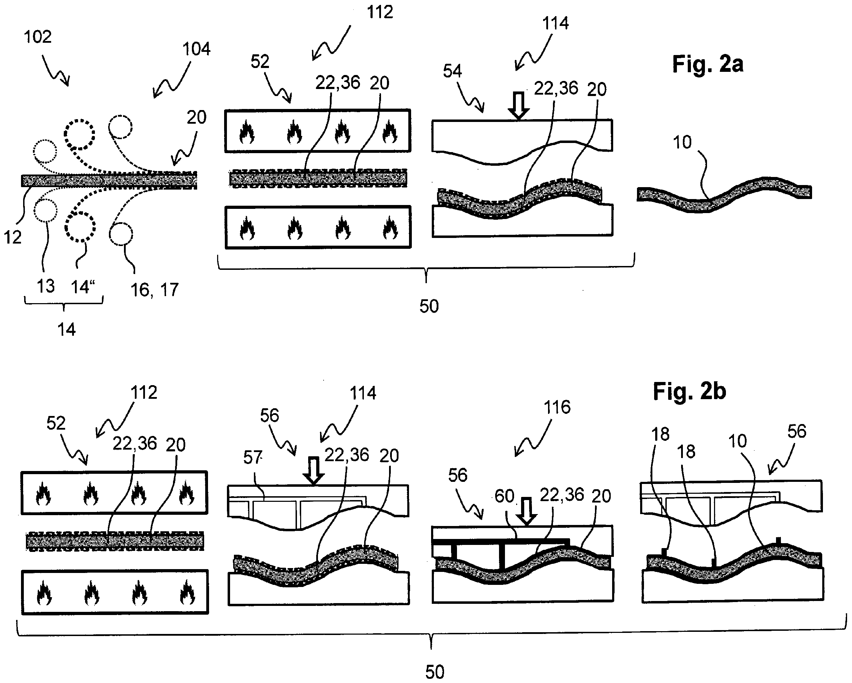

Figuren 1a und 2 zeigen ein Flussdiagramm bzw. eine schematische Darstellung eines Verfahrens 100 zur Herstellung eines Sandwichbauteils 10 mit einer Kernschicht 12 aus einem geschäumten Kunststoff. In einem ersten Prozessschritt 102 wird eine einen geschäumten Kunststoff umfassende Kernschicht 12, eine Deckschicht 14 sowie eine (optionale) Zusatzschicht 16 in Form jeweiliger Endlosmaterialien bereitgestellt.

Die Kernschicht 12 dient der Erhöhung der Flächenträgheit des späteren Sandwichbauteils 10. Sie ist aus Polyethylenterephthalat (PET) hergestellt und weist zumindest an ihrer Oberfläche eine offenporige Gestalt auf.

Die Deckschicht 14 umfasst ein unkonsolidiertes faserverstärktes textiles Gebilde 14", beispielsweise einen Vliesstoff, ein Gewebe oder ein Gelege. Die Verstärkungsfasern können z.B. Glas-, Karbon-, Aramid- oder Naturfasern oder sein. Das textile Gebilde 14" weist weiterhin thermoplastische Fasern auf, welche im vorliegenden Ausführungsbeispiel aus Polypropylen (PP) hergestellt sind. Die Deckschicht 14 umfasst weiterhin eine Schmelzschicht 13 aus Polypropylen (PP), die im vorliegenden Ausführungsbeispiel in Form einer Folie bereitgestellt ist. Die optionale Zusatzschicht 16 ist aus einem Polyamid (PA) hergestellt.

Die aus Polyethylenterephthalat (PET) ausgebildete Kernschicht 12 weist somit eine erste Schmelztemperatur auf, welche mit ca. 250°C erheblich höher liegt, als die Schmelztemperatur der aus Polypropylen (PP) ausgebildeten Schmelzschicht 13 und der aus ebenfalls aus Polypropylen (PP) ausgebildeten Thermoplastfasern der Deckschicht 14, denn Polypropylen besitzt eine Schmelztemperatur von ca. 160°C. Die Schmelztemperatur der aus PES oder Polyamid ausgebildeten Zusatzschicht 16 hingegen liegt oberhalb der Schmelztemperaturen der thermoplastischen Schmelzschicht 13 bzw. der Thermoplastfasern der Deckschicht 14. Alternativ ist es auch möglich, statt der Zusatzschicht 16 eine Dekorschicht 17, insbesondere zusammen mit einer weiteren Schmelzschicht aus demselben Thermoplasten wie die andere Schmelzschicht 13, an der Deckschicht 14 anzuordnen.

Im Prozessschritt 104 werden die unterschiedlichen Schichten 12, 14, 16 unter Ausbildung eines Mehrlagenverbunds 20 aneinander angeordnet. Im vorliegenden Fall wird an die Kernschicht 12 beidseitig jeweils die Deckschicht 14 und auf diese wiederum auch beidseitig die Zusatzschicht 16 angelegt, wodurch sich mit anderen Worten die Kernschicht 12 in der Mitte des Mehrlagenverbunds 20 befindet und die jeweiligen Außenseiten des Mehrlagenverbunds 20 durch die Zusatzschichten 16 gebildet werden. Der auf diese Weise geschichtete Mehrlagenverbund 20 wird anschließend einer (in der Figur nicht gezeigten) Schneidanlage zugeführt, in der aus dem Endlosmaterial des Mehrlagenverbunds 20 Abschnitte 22 herausgetrennt werden. Diese Abschnitte 22 werden dann - wie in Figur 2a gezeigt - einer Heizvorrichtung 52 einer Endfertigungsvorrichtung 50 für Sandwichbauteile 10 zugeführt. Die Heizvorrichtung 52 kann beispielsweise eine Heizpresse, ein Infrarot-Strahlungsfeld etc. sein. Mittels der Heizvorrichtung 52 werden dabei in Prozessschritt 112 die Abschnitte 22 des Mehrlagenverbunds 20 konvektiv, konduktiv und/oder durch Wärmestrahlung über die Schmelztemperaturen der Schmelzschicht 13 und der Thermoplastfasern der Deckschicht 14 erhitzt. Die Temperaturführung der Heizvorrichtung 52 wird dabei derart gewählt, dass der Mehrlagenverbund 20 weder über die Schmelztemperatur der Zusatzschicht 16 noch über die Schmelztemperatur der aus PET hergestellten Kernschicht 12 erhöht wird. Dadurch schmelzen im Mehrlagenverbund 20 nur die Thermoplastanteile der Deckschicht 14, also die Schmelzschicht 13 und die Thermoplastfasern des Hybridtextils 14" auf. Die Kernschicht 12 hingegen schmilzt nicht und bleibt somit während der Verarbeitung nahezu stabil, weist jedoch bei der erhöhten Temperatur eine gegenüber der Raumtemperatur verbesserte plastische Verformbarkeit auf.

Der auf diese Weise vorgewärmte und erweichte Mehrlagenverbund 20 wird anschließend in einem Umformwerkzeug 54 zugeführt, in welches er eingelegt wird. Gegebenenfalls können dabei noch weitere Dekormaterialien an dem Mehrlagenverbund 20 angebracht werden. Der Mehrlagenverbund 20 wird in Prozessschritt 114 mittels des Umformwerkzeugs 54 in einem Thermoformprozess umgeformt. Die Formstabilität und somit der Gegendruck der heißen Schaum-Kernschicht 12 führen dabei zu einer Konsolidierung des Hybridtextils 14" der Deckschicht 14. Durch das Verpressen dringen die aufgeschmolzenen thermoplastischen Anteile des Mehrlagenverbunds 20 weiterhin in die offenporige Oberfläche der Kernschicht 12 ein, sodass nach dem Erstarren der thermoplastischen Anteile eine mechanische Verbindung mit der Kernschicht 12 ausgebildet wird. Das geschmolzene Material der Schmelzschicht 13 verbindet sich entweder ebenfalls durch mechanische Verankerung im Faservlies der Deckschicht 18 oder chemisch mit dem Thermoplastanteil des Hybridtextils 14" der Deckschicht 14. Es entsteht somit ein fester Verbund aus der geschäumten Kernschicht 12 und der konsolidierten faserverstärkten Deckschicht 14.

Anschließend wird der auf diese Weise geformte Abschnitt 22 des Mehrlagenverbundes 20 abgekühlt, optional unter Ausbildung des Sandwichbauteils 10 noch beschnitten sowie aus dem Werkzeug 54 entnommen.

In Figur 2b ist eine alternative Verfahrensabfolge zur Herstellung des Sandwichbauteils 10 dargestellt. Der in Prozessschritt 104 durch Aufeinanderlegen der Einzelschichten hergestellte und der gewünschten Bauteilkontur entsprechend zugeschnittene Mehrlagenverbund-Abschnitt 22 wird ebenfalls mittels der Heizvorrichtung 52 derart aufgewärmt, dass die Deckschicht 14 in den plastischen Zustand überführt wird (Prozessschritt 112). Anschließend wird der so erwärmte Abschnitt 22 in ein Werkzeug 56 eingelegt, welches vorliegend als kombinierte Spritz-Press-Maschine ausgebildet ist.

Das Werkzeug 56 weist entsprechende Kanäle 57 zur Zuführung eines Kunststoffmaterials 60 auf. Der vorgewärmte Mehrlagenverbund 20 wird wiederum zunächst mittels des Werkzeugs 56 umgeformt (Prozessschritt 114). Danach wird in einem Prozessschritt 116 mittels des Werkzeugs 56 durch die Kanäle 57 das Kunststoffmaterial 60 in das Werkzeug 56 eingespritzt bzw. an den umgeformten Mehrlagenverbund 20 angespritzt, wodurch mehrere als Verstärkungs-, Anbindungs- bzw. Versteifungselemente 18 dienende Kunststoffelemente unter Ausbildung des Sandwichbauteiles 10 hergestellt werden. Die Versteifungselemente 18 und Anbindungselemente können beispielsweise rippenförmig oder auch in Form von anderweitig ausgebildeten partiellen Bauteilbereichen als Versteifungen oder Verstärkungen an dem Sandwichbauteil 10 vorgesehen sein. Das Fixieren der Versteifungselemente 18 kann beispielsweise durch ein Anspritzen in der sogenannten KIS-Technologie (KIS: Konsolidierung im Spritzgusswerkzeug) erfolgen. Nach dem Anspritzen der Versteifungselemente 18 wird das fertige Sandwichbauteil 10 mitsamt den Versteifungselementen 18 aus dem Werkzeug 56 entformt und entnommen.

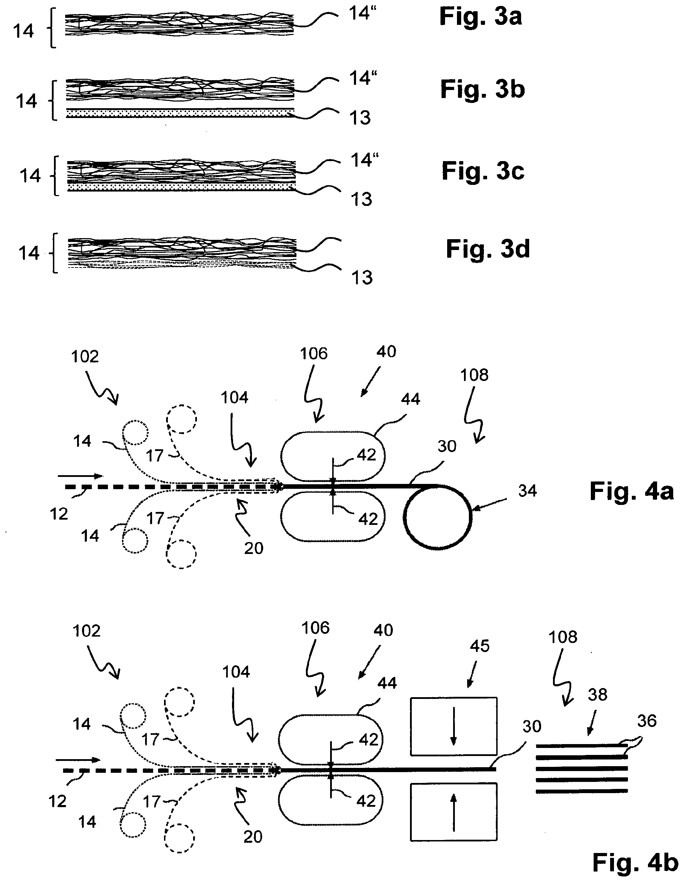

Figuren 3a - 3d zeigen Beispiele für unterschiedliche Ausgestaltungen der Deckschicht 14. Im Ausführungsbeispiel der Figur 3a besteht die Deckschicht 14 aus einem unkonsolidierten Hybridtextil 14", das thermoplastische Anteile (insbesondere in Form thermoplastischer Fasern) sowie Verstärkungsfasern enthält. Das Hybridtextil 14" kann insbesondere ein Vliesstoff, ein Faserflor, ein Gewebe oder ein Gelege sein. Im Ausführungsbeispiel der Figur 3b umfasst die Deckschicht 14 neben dem Hybridtextil 14" eine Schmelzschicht in Form einer thermoplastischen; diese Ausgestaltung der Deckschicht 14 ist auch in Figuren 2a und 2b dargestellt. Bei der Ausführungsform der Figur 3c ist die Schmelzschicht 13 fest mit dem Hybridtextil 14" verbunden, beispielsweise angeformt oder angeklebt. Das Ausführungsbeispiel der Figur 3d hingegen zeigt eine Deckschicht, in der die Schmelzschicht 13 durch thermoplastische Fasern gebildet sind, die an das restliche Hybridtextil 14" angefügt oder in einer solchen Weise in das Hybridtextil 14" integriert sind, dass in einer Außenseite der Deckschicht 14 (die im Mehrlagenverbund 20 an die Kernschicht 12 angrenzt) eine Anreicherung des thermoplastischen Anteils vorliegt.

Figur 1b zeigt ein Flussdiagramm eines alternativen Verfahrensablaufs 100' zum Herstellen des Sandwichbauteils 10, bei dem zunächst aus der geschäumten Kernschicht 12 und der Deckschicht 14 (und ggf. weiteren Schichten) ein Halbzeug 30 hergestellt wird, das anschließend der Endfertigungseinrichtung 50 zugeführt und dort - analog zum Verfahrensablauf der Figur 1a - in der Heizvorrichtung 52 erhitzt und in dem Umformwerkzeug 54 umgeformt wird.

Der zugehörige Teilprozesses der Halbzeugherstellung ist in Figuren 4a und 4b näher erläutert. Diese Figuren zeigen in jeweils schematischer Darstellung die Bereitstellung der wenigstens einer Kernschicht 12, wenigstens einer Deckschicht 14 und wenigstens einer Dekorschicht 17 (Prozessschritt 102), das Schichten dieser Einzelschichten zu einem Mehrlagenverbund 20 (Prozessschritt 104) und das Verbinden dieser Einzelschichten zu einem Bauteilhalbzeug 30 unter einer ersten Wärmezufuhr 42 an einer beheizten Walzanlage 44 einer Vorfertigungsvorrichtung 40 (Schritt 106). Die Anhaftung der Dekorschicht 17 wird durch das Erweichen eines Thermoplastanteils der Deckschicht 14 gewährleistet und kann optional durch eine Schmelzfolie (hier nicht dargestellt) zwischen der Deckschicht 14 und der Dekorschicht 17 verbessert werden. Alternativ kann auf die Dekorschicht 17 verzichtet werden, da in klassischer Weise bei hochwertigen/ wärmeempfindlichen Dekoren wie z.B. Leder die Kaschierung nachträglich auf das fertige Bauteil aufgebracht wird.

Mittels der beheizten Walzanlage 44, welche auch als Rollpresse ausgebildet sein kann, werden diese Schichten 12, 14, 17 einerseits aufeinander gepresst und andererseits unter der Wärmezufuhr 42, also durch Erwärmung und zumindest lokales Aufschmelzen einzelner Schichten, miteinander verbunden und teilkonsolidiert. Im in Fig. 4a gezeigten Ausführungsbeispiel wird im Anschluss an das Verbinden der einzelnen Schichten zu dem Halbzeug 30 das Halbzeug 30 zu wenigstens einer Halbzeugrolle 34 in der Vorfertigungsvorrichtung 40 aufgerollt (Prozessschritt 108).

Im in Fig. 4b gezeigten Ausführungsbeispiel wird das Halbzeug 30 mittels einer Schneidvorrichtung 45 der Vorfertigungsvorrichtung 40 in mehrere Einzelteile 36 des Bauteilhalbzeugs 30 konfektioniert und aus diesen Einzelteilen 36 wenigstens ein Einzelteilstapel 38 gebildet (Prozessschritt 108).

Bei der Herstellung des Halbzeugs 30 nach den in Figuren 4a und 4b dargestellten Verfahren erfolgt das Verbinden der Einzelschichten (Verbinden der Kernschicht 12, der Deckschicht 14 und gegebenenfalls der Dekorschicht 17) mittels dünner Schmelzfolien, wodurch sich der Vorteil ergibt, dass die Herstellung des Mehrlagenverbunds 20 nicht - wie in Fig. 2a und 2b gezeigt - unmittelbar an weitere Verarbeitungsschritte gekoppelt werden muss. Die einzelnen Schichten können im Vorfeld zu dem Halbzeug 30 verarbeitet (und aufgerollt bzw. in gewünschte Längen abgeschnitten und aufgestapelt werden) und später abgerollt bzw. entstapelt (Prozessschritt 110) und dem in Figuren 2a und 2b gezeigten Prozessschritten des Aufheizens (Schritt 112) und des Umformens (Schritt 114) zugeführt werden. Das Halbzeug 30 unterscheidet sich in seinem Handling nicht von einem einschichtigen Werkstoff (z.B. von einer Schaumschicht oder einem Vlies) und besitzt sehr gute Umformeigenschaften. Somit müssen Hersteller von gepressten oder gespritzten Bauteilen nicht mehr über teils sehr aufwendige Sortiereinrichtungen verfügen, um Sandwichbauteile herstellen zu können.

Das gemäß Figur 4a oder 4b hergestellte Halbzeug 30 kann auch unmittelbar aus der Vorfertigungsvorrichtung 40 in die Endfertigungsvorrichtung 50 der Fig. 2a bzw. 2b transferiert werden, wobei hierbei die einzelne Verfahrensschritte der Vorfertigungsvorrichtung 40 und einer Endfertigungsvorrichtung 50 aufeinander abgestimmt werden müssen. Dabei wird zunächst das Bauteilhalbzeug 30 durch Aufeinanderlegen der Kernschicht 12 und der Deckschichten 14 zunächst ohne die Dekorschichten 17 gebildet. Mittels des Schneidwerkzeugs 45 wird das Bauteilhalbzeug 30 sukzessive in die Einzelteile 36 konfektioniert, wobei die Einzelteile 36 nicht - wie in Figur 4b gezeigt - gestapelt werden, sondern sukzessive in der an die Vorfertigungsvorrichtung 40 anschließenden Endfertigungsvorrichtung 50 unter einer (zweiten) Wärmezufuhr 52 erwärmt, die jeweiligen Schichten in einen plastischen Zustand überführt werden und anschließend mittels eines Werkzeugs 54 oder 56 der Endfertigungsvorrichtung 50 umgeformt und beschnitten werden, wobei beispielsweise (unter erhöhtem Fertigungsaufwand) die Dekorschicht 17 aufgebracht werden kann. Der Bauteilbeschnitt erfolgt dabei nach dem Aufbringen der Dekormaterialien bzw. nach dem Umformen oder Abkühlen bzw. durch integrierten Schnittkanten/Pinchkanten im Werkzeug 54, 56 während des Schließens des Werkzeugs.

Alternativ kann die Herstellung des Sandwichbauteils 10 aus dem Einzelteil 36 bzw. aus einem bedarfsgerecht konfektionierten Abrollteil der Halbzeugrolle 34 erfolgen. Das Bauteilhalbzeug 30 umfasst in diesem Fall bereits die Kernschicht 12, die zwei Deckschichten 14, die zwei Dekorschichten 17 und ggf. dazwischen angeordnete (in Figuren 4a und 4b nicht gezeigte) Schmelzschichten (siehe Figuren 4a bzw. 4b). Diese einzelnen Schichten sind infolge der (ersten) Wärmezufuhr 42 in der Vorfertigungsvorrichtung 40 bereits miteinander verbunden. Das Bauteilhalbzeug 30 bzw. dessen Einzelteil 36 enthält somit bereits alle benötigten Schichten, wodurch die einzelnen Schichten lediglich unter der zweiten Wärmezufuhr 52 durch die Endfertigungsvorrichtung 50 in den plastischen Zustand überführt werden und das dadurch entstehende Sandwichbauteil 10 mittels des Werkzeugs 54 bzw. 56 bedarfsgerecht verformt wird. - Alternativ ist es allerdings auch möglich, die kalte Dekorschicht 17 gemeinsam mit dem aufgeheizten (restlichen) Halbzeug in das konturierte Umformwerkzeug 54 einzulegen.

Beim Verbinden der Schichten 12, 14, 17 des Mehrlagenverbunds 20 im Zuge der Halbzeugherstellung kann sowohl eine strukturelle als auch eine flächige Konsolidierung der Deckschichten 14 erfolgen. Bei der strukturellen Konsolidierung wird der Schichtverbund 20 lokal erwärmt und der thermoplastische Anteil aufgeschmolzen.

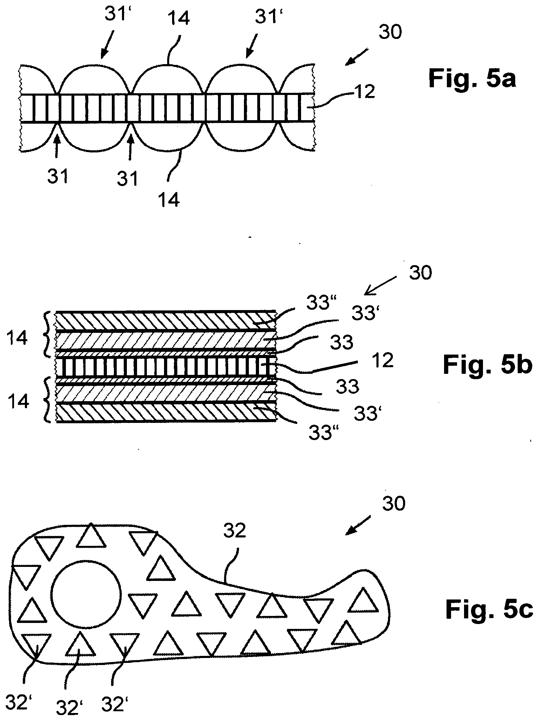

In Figur 5a ist exemplarisch eine Querschnittsansicht eines strukturell konsolidierten Halbzeugs 30 mit einer Kernschicht 12 und einer Deckschicht 14 gezeigt. Lediglich in den Tälern 31 ist die Deckschicht 14 stark konsolidiert, der Thermoplastanteil also aufgeschmolzen. Im Bereich der Erhöhungen 31' sind die Deckschichten 14 hingegen nur schwach oder nahezu gar nicht konsolidiert. Die Verbindungsherstellung zwischen den Deckschichten 14 und der geschäumten Kernschicht 12 erfolgt also maßgeblich durch die Aufschmelzung des Thermoplastmaterials in den Tälern 31. Die dargestellte Struktur des Halbzeugs 30 ist nur exemplarisch zu verstehen und kann darüber hinaus auch weitere andere strukturelle Ausgestaltungen aufweisen. Die strukturelle Konsolidierung hat den Vorteil, dass das derart hergestellte Halbzeug 30 noch formbar ist und z. B. in Rollenform gelagert werden kann und somit als Endlosmaterial einer Produktion für Faserverbundbauteile zugeführt werden kann.

Bei einer Flächenkonsolidierung wird hingegen die gesamte faserverstärkte thermoplastische Deckschicht 14 gleichmäßig konsolidiert, wie in der schematischen Schnittansicht in Figur 5b dargestellt. Hierbei wird eine Konsolidierung der Deckschichten 14 zwischen dem unkonsolidierten und voll konsolidierten Zustand angestrebt. Vorliegend sind drei unterschiedliche Bereiche 33, 33', 33" gekennzeichnet. Der Bereich 33 ist voll konsolidiert, der Bereich 33' ist stark konsolidiert und der Bereich 33" ist unkonsolidiert. Insgesamt ist eine derartige Konsolidierung zu wählen, die eine ausreichende Anbindung der Deckschichten 14 an die geschäumte Kernschicht 12 ermöglicht, diese aber gleichzeitig nicht schädigt. Aufgrund der Konsolidierung der Deckschichten 14 lässt sich das derartig hergestellte Halbzeug 30 nur schlecht in eine Rollenform bringen, weshalb sich bei einer flächigen Konsolidierung die Platinenform als Halbzeugform 30 eignet.

In Figur 5c ist in einer schematischen Draufsicht das Halbzeug 30 in einer bereits vorkonfektionierten Formgebung dargestellt. Ein Randbereich 32 kann dabei abgequetscht werden, so dass die einzelnen Schichten 12, 14 durch sogenannte Pinchkanten zusammengeführt und miteinander verbunden sind. Zusätzlich zu einem derartig geschlossenen Randabschluss oder auch alternativ zu einer offenen Beschnittkante können mehrere strukturelle Konsolidierungsflächen 32 eingebracht werden. Die Form und Gestaltung dieser Konsolidierungsflächen 32 kann dabei im Wesentlichen beliebig gewählt werden, je nachdem, welche mechanischen Eigenschaften das Halbzeug 30 und das daraus herzustellende Faserverbundbauteil aufweisen soll. Die Herstellung des in Figur 5c schematisch dargestellten Halbzeugs 30 kann ebenfalls kontinuierlich oder diskontinuierlich erfolgen.

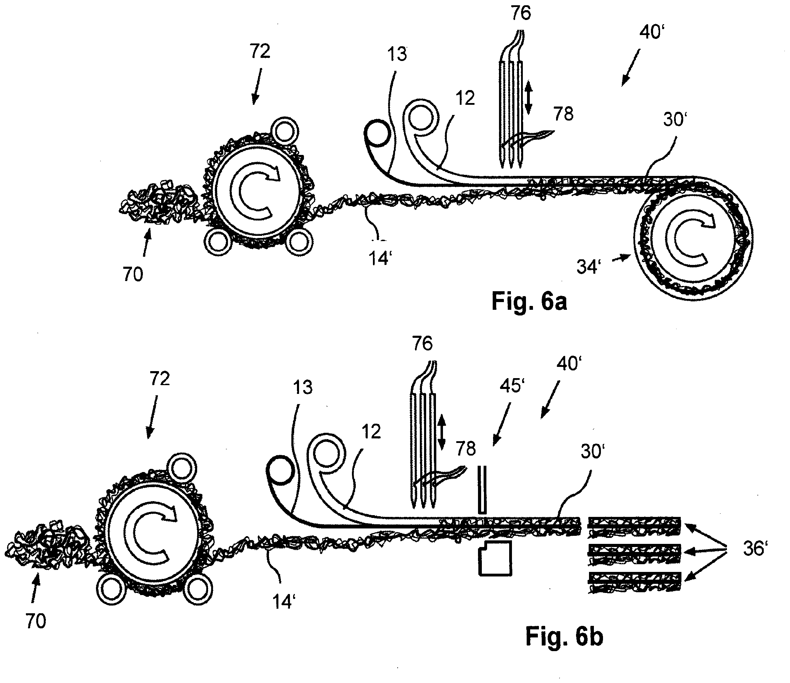

Alternativ zu der in Figuren 4 und 5 dargestellten Ausführungsformen, bei der die Verbindung der Einzelschichten 12, 14 des Halbzeugs 30 durch Wärmezufuhr 42, also thermisch, erfolgt, können die Einzelschichten 12, 14 auch mechanisch miteinander verbunden werden. Dies ist in Figuren 6a und 6b beispielhaft anhand des Vernadelns der Einzelschichten 12, 14 dargestellt.

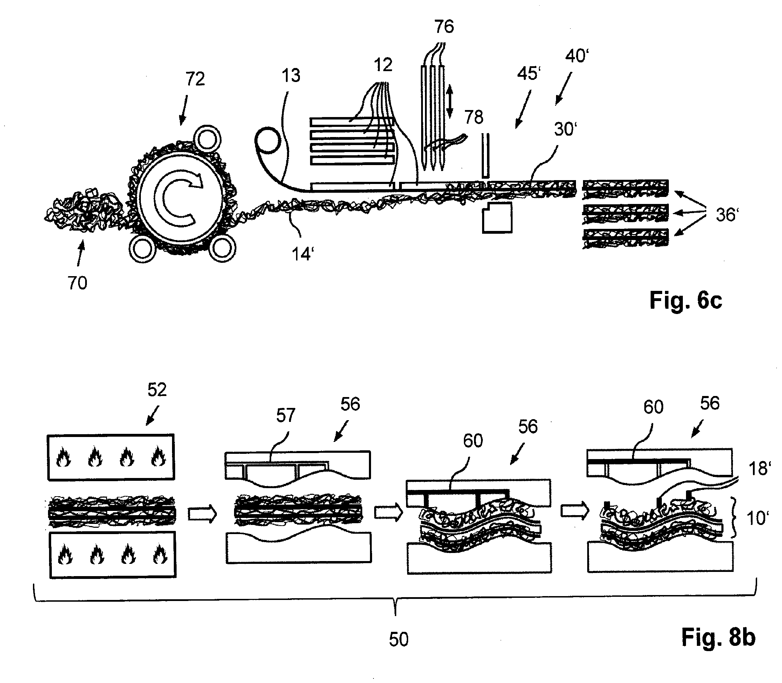

Figur 6a zeigt eine schematische Seitenansicht einer Vorfertigungsvorrichtung 40' zum Herstellen eines Halbzeugs 30' ist in Figur 6 gezeigt. An der Vorfertigungsvorrichtung 40' wird ein Fasergemisch 70 aus Thermoplastfasern und Verstärkungsfasern bereitgestellt. Das Fasergemisch 70 wird durch eine sogenannte Krempelmaschine 72 hindurchgeführt. Mittels der zur Vorfertigungsvorrichtung 40' gehörenden Krempelmaschine 72 wird das Fasergemisch 70 parallelisiert und gereinigt, so dass die Krempelmaschine 72 ein Faserflor 14' in Form eines Endlosmaterials verlässt, das hier als Deckschicht 14 verwendet wird.

Eine einen geschäumten Kunststoff, vorzugsweise PET, umfassende Kernschicht 12 sowie eine beispielsweise aus Polypropylen hergestellte thermoplastische Schmelzschicht 13 werden ebenfalls in Form von Endlosmaterialen bereitgestellt. Das Faserflor 14', die thermoplastische Schmelzschicht 13 und die Kernschicht 20 werden aneinander angeordnet und zu einer Mehrzahl von Nadeln 76 weiterbefördert. Die Nadeln 76 weisen jeweils Widerhaken 78 auf. Die mit den Widerhaken 78 besetzten Nadeln 76 werden durch den aus dem Faserflor 14', der thermoplastischen Schmelzschicht 13 und der Kernschicht 12 ausgebildeten Mehrlagenverbund 20 hindurchgeführt bzw. hindurchgestochen. Anschließend werden die hindurch geführten Nadeln 76 wiederum aus der Kernschicht 12, dem Faserflor 14' und der thermoplastischen Schmelzschicht 13 herausgezogen, wodurch einzelne oder mehrere Fasern des Faserflors 14' mit dem Widerhaken 78 verhakt und beim Herausziehen der Nadeln 76 mechanisch mit der Kernschicht 12 und der thermoplastischen Schmelzschicht 13 verankert werden.

Mit anderen Worten erfolgt also eine Vernadlung des Faserflors 14' mit der thermoplastischen Schmelzschicht 13 und der Kernschicht 12. Anschließend werden die miteinander vernadelten Schichten, welche das Halbzeug 30' ausbilden, in Form einer Rolle 34' aufgerollt, welche besonders einfach transportierbar und lagerbar ist.

In Figur 6b ist in einer schematischen Seitenansicht eine alternative Ausführungsform der Vorfertigungsvorrichtung 40' sowie ein alternatives Verfahren zum Herstellen des Halbzeugs 30' gezeigt. Das hier gezeigte Verfahren unterscheidet sich von dem im Zusammenhang mit der Figur 6a erläuterten Verfahren dadurch, dass nach der Vernadlung des Faserflors 14' mit der Schmelzschicht 13 und der Kernschicht 12 mittels einem Schneidwerkzeug 45' eine Vorkonfektionierung des Halbzeugs 30' zu jeweiligen Halbzeugeinzelteilen 36', beispielsweise in Platinenform, vorgenommen wird. Die Halbzeugeinzelteile 36' können anschließend beispielsweise aufeinander gestapelt und in ein Zwischenlager gebracht werden.

In Figur 6c ist eine weitere alternative Abfolge von Verfahrensschritten zur Herstellung des Halbzeugs 30' gezeigt. Der hier gezeigte Verfahrensablauf unterscheidet sich von dem in Fig. 6b gezeigten Verfahrensablauf lediglich dadurch, dass die Kernschicht 12 in Form von vorkonfektionierten Einzelteilen und nicht als Endlosware bereitgestellt werden.

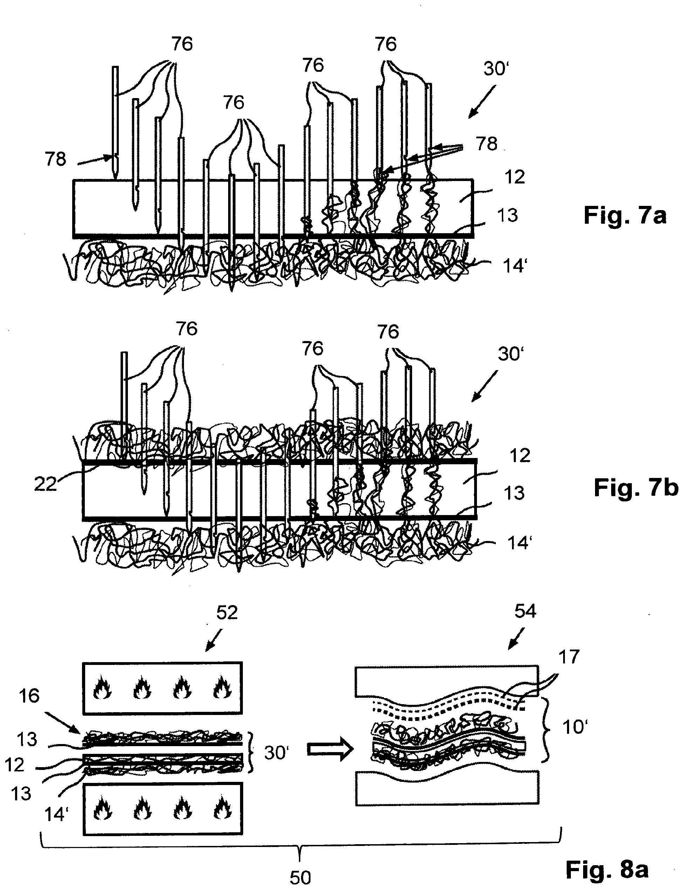

In Figur 7a ist in einer schematischen Detailansicht der Vernadelungsprozess zu dem Halbzeug 30' nochmals im Detail dargestellt. Wie zu erkennen, tauchen die einzelnen Nadeln 76 mit ihren jeweiligen Widerhaken 78 durch die Kernschicht 12, durch die Schmelzschicht 13 und das Faserflor 14' vollständig hindurch. Anschließend werden die Nadeln 76 wieder in entgegengesetzter Richtung aus den einzelnen Lagen 12, 13, 14' herausgezogen, wobei einzelne oder auch mehrere Fasern des Faserflors 14' sich in den jeweiligen Widerhaken 78 verhaken und beim Herausziehen der Nadeln 76 durch die thermoplastische Schmelzschicht 13 und die Kernschicht 12 hindurchgeführt werden. Dadurch werden die einzelnen Fasern mechanisch, d.h. durch eine mechanische Verankerung, mit der thermoplastischen Schmelzschicht 13 und der Kernschicht 12 verbunden.

In Figur 7b ist eine alternative Anordnung der einzelnen Lagen 12, 13, 14' während ihrer Vernadelung gezeigt. Hier wird der gesamte Mehrlagenverbund 20, bestehend aus den jeweils außenseitig angeordneten Faserflorlagen 14' und den dazwischen angeordneten thermoplastischen Schmelzschichten 13 sowie der Kernschicht 12 miteinander verbunden. Die einzelnen Nadeln 76 tauchen dabei wiederum durch sämtliche Lagen 12, 13, 14' hindurch und werden anschließend wieder in entgegengesetzter Richtung herausgezogen, wobei sich wiederum einzelne oder mehrere Fasern des Faserflors 14' mit den jeweiligen Widerhaken 78 verhaken und beim Herausziehen der Nadeln 76 mechanisch mit den thermoplastischen Schmelzschichten 13 und der Kernschicht 12 verbunden werden.

In Fig. 8a ist eine Verfahrensabfolge zum Herstellen eines Sandwichbauteils 10' aus dem Halbzeug 30' in einer Endfertigungseinrichtung 50 dargestellt. Zur Herstellung des Sandwichbauteils 10' wird - analog zu dem Ausführungsbeispiel der Figur 2a - eine Heizvorrichtung 52 sowie ein als Presse ausgebildetes Umformwerkzeug 54 verwendet. Das Halbzeug 30' kann dabei wahlweise in Form der Rolle 34' oder auch in Form der vorkonfektionierten Halbzeugeinzelteile 36' an der Heizvorrichtung 52 bereitgestellt werden. Wahlweise kann dabei eine zusätzliche als Oberlage dienende Zusatzschicht 16 an dem Halbzeug 30' angebracht werden. Die Zusatzschicht 16 kann ebenfalls in Form eines Vlieses bzw. eines Faserflors bereitgestellt werden. Die Zusatzschicht 16 weist dabei eine höhere Schmelztemperatur als die Thermoplastfasern des Faserflors 14' auf.

Das Halbzeug 30' mitsamt der Zusatzschicht 16 wird in der Heizvorrichtung 52 über die Schmelztemperatur der thermoplastischen Schmelzschicht 13 und/oder des Thermoplastanteils des Faserflors 14' erwärmt. Die Erwärmung kann dabei konvektiv, konduktiv oder durch Wärmestrahlung erfolgen. Das so erwärmte Halbzeug 30' wird anschließend in dem Umformwerkzeug 54 angeordnet. Dabei können optional auch noch weitere Deckschichten oder auch optionale Schmelzschichten auf dem Halbzeug 30' angebracht werden.

Anschließend wird das durch die Erhitzung erweichte Halbzeug 30' in dem als Thermoformpresse dienenden Werkzeug 54 umgeformt, abgekühlt und gegebenenfalls beschnitten, wobei hier optional noch weitere Dekorschichten 17 an dem Halbzeug 30' angebracht werden können, bevor das fertige Sandwichbauteil 10' aus dem Umformwerkzeug 54 entnommen wird.

In Fig. 8b ist eine alternative Verfahrensabfolge zum Herstellen des Sandwichbauteils 10' gezeigt. Das Halbzeug 30' wird wiederum (evtl. gemeinsam mit einer oder mehrerer Zusatzschichten 16) in der Heizvorrichtung 52 erwärmt, bevor es dem Werkzeug 56 zugeführt wird. Das Werkzeug 56 ist vorliegend als Spritzpresswerkzeug ausgebildet und weist ein oder mehrere Kanäle 57 zur Zuführung eines Spritzgussmaterials 60 auf. Das Spritzgussmaterial 60 kann dabei Füll- oder auch Verstärkungsmaterialien enthalten.

Das erwärmte Halbzeug 30' mitsamt der Zusatzschicht(en) 16 wird mittels des Werkzeugs 56 umgeformt und anschließend abgekühlt, wobei nach dem Abkühlen bzw. während des Werkzeugschließens durch integrierte Schnittkanten gegebenenfalls schon ein Bauteilbeschnitt erfolgen kann. Während oder nach dem Abkühlen werden mehrere rippenartige Elemente 18' oder partielle Bauteilbereiche an das Sandwichbauteil 10' angespritzt. Die Elemente 18' können beispielsweise als zusätzliche Versteifungen oder als Anbindungselemente zum Verbinden des Sandwichbauteils 10' mit anderen Bauteilen dienen. Schließlich wird das fertige Sandwichbauteil 10' mitsamt den Elementen 18' entformt und kann aus dem Werkzeug 56 entnommen werden.

Das Sandwichbauteil 10, 10' kann beispielsweise als Innenverkleidungsbauteil in einem Kraftwagen dienen. Zum Beispiel kann das Sandwichbauteil 10, 10' als Türinnenverkleidungsteil oder dergleichen verwendet werden. Durch den sandwichartigen Aufbau weist das Sandwichbauteil 10, 10' ein besonders geringes spezifisches Gewicht bei gleichzeitig guten mechanischen Eigenschaften auf.

Anstelle der gezeigten rollenförmigen Ausgangsmaterialien und oder eingesetzten Endlosmaterialien sind alternativ abgelängte vorkonfektionierte Materialzuschnitte vorstellbar.

## Patentansprüche

1. Verfahren (100) zum Herstellen eines Sandwichbauteils (10), insbesondere eines Innenverkleidungsbauteils für ein Kraftfahrzeug, mit den Schritten:
- Bereitstellen einer einen geschäumten Kunststoff umfassenden Kernschicht (12) mit einer ersten Schmelztemperatur und einer Deckschicht (14), welche Verstärkungsfasern und Kunststofffasern mit einer zweiten Schmelztemperatur umfasst, wobei die erste Schmelztemperatur höher ist als die zweite Schmelztemperatur (Schritt 102) und wobei die Kunststofffasern der Deckschicht (14) im Wesentlichen aus Polypropylen (PP) und die Kernschicht (12) aus Polyethylenterephthalat (PET) hergestellt sind;
- Anordnen der Kernschicht (12) an der Deckschicht (14) unter Ausbildung eines Verbunds (Schritt 104) der Schichten zu einem Halbzeug (30, 30');
- Erhitzen des Halbzeugs (30, 30') in einer Heizvorrichtung (52) einer Endfertigungseinrichtung (50) auf eine Temperatur, welche niedriger als die erste Schmelztemperatur und höher als die zweite Schmelztemperatur ist (Schritt 112);
- Umformung des vorab schon erhitzten Halbzeugs (30, 30') zeitlich und/oder örtlich von dem eigentlichen Herstellprozess des Sandwichbauteils (10) im Bereitstellungsschritt (102) entkoppelt in einem Umformwerkzeug (54) der Endfertigungseinrichtung (50) zur Erzeugung des Sandwichbauteils (10) (Schritt 114) bei einer Temperatur, welche niedriger als die erste Schmelztemperatur und höher als die zweite Schmelztemperatur ist (Schritt 112).
- wobei die Deckschicht (14) bei der Umformung konsolidiert ohne dass die Kernschicht (12) wesentlich zusammengedrückt wird oder schmilzt.

2. Verfahren nach Anspruch 1,
**dadurch gekennzeichnet, dass** als die Kernschicht (12) eine zumindest an ihrer Oberfläche offenporige Kernschicht bereitgestellt wird.

3. Verfahren nach Anspruch 1 oder 2,
**dadurch gekennzeichnet, dass** die wenigstens eine Deckschicht (14) ein thermoplastisches, faserverstärktes, textiles Gebilde, insbesondere einen Vliesstoff, ein Gewebe oder ein Gelege aus Verstärkungsfasern und thermoplastischen Fasern umfasst die eine niedrigere Schmelztemperatur aufweisen als die thermoplastische Kernschicht (12)

4. Verfahren nach Anspruch 3,
**dadurch gekennzeichnet, dass** als die wenigstens eine Deckschicht (14) ein unkonsolidiertes Hybridvlies, insbesondere ein unkonsolidiertes Hybridnadelvlies, umfasst, welches durch den Pressendruck zumindest teilkonsolidiert wird.

5. Verfahren nach einem der vorhergehenden Ansprüche,
**dadurch gekennzeichnet, dass**
- die Deckschicht (14) eine Schmelzschicht (13) aus einem Thermoplast mit einer dritten Schmelztemperatur, welche niedriger als die erste Schmelztemperatur und maximal so hoch wie die zweite Schmelztemperatur ist, umfasst,
- wobei die Schmelzschicht (13) bei der Ausbildung des Mehrlagenverbunds (20) (Schritt 104) zwischen der Kernschicht (12) und einem Faseranteil (14") der Deckschicht (14) angeordnet wird.

6. Verfahren nach einem der vorhergehenden Ansprüche,
**dadurch gekennzeichnet, dass** Schmelzschicht (13) und die Kunststofffasern der Deckschicht (14) aus Polypropylen (PP) bestehen.

7. Verfahren nach einem der vorhergehenden Ansprüche,
**dadurch gekennzeichnet, dass** eine Zusatzschicht (16) mit einer vierten Schmelztemperatur, welche höher als die zweite Schmelztemperatur ist, unter Ausbildung des Mehrlagenverbunds (20) an der Deckschicht (14) angeordnet wird.

8. Verfahren nach einem der vorhergehenden Ansprüche,
**dadurch gekennzeichnet, dass** eine Dekorschicht (17), insbesondere zusammen mit einer weiteren Schmelzschicht (13') aus demselben Thermoplasten wie die andere Schmelzschicht (13), unter Ausbildung des Mehrlagenverbunds (20) an der Deckschicht (14) angeordnet wird.

9. Verfahren nach einem der vorhergehenden Ansprüche,
**dadurch gekennzeichnet, dass** das Halbzeug (30, 30') in Form eines Endlosmaterials hergestellt und in Rollenform (34) angeordnet wird (Schritt 108).

10. Verfahren nach einem der vorhergehenden Ansprüche,
**dadurch gekennzeichnet, dass** das Halbzeug (30, 30') in Form konfektionierter Halbzeugeinzelteile (36) bereitgestellt wird (Schritt 108).

11. Verfahren nach Anspruch 9 oder 10,
**dadurch gekennzeichnet, dass**
- das Halbzeug (30, 30') zu wenigstens einer Halbzeugrolle (34) aufgerollt und/oder in mehrere Einzelteile (36) konfektioniert und unter Bildung wenigstens eines Einzelteilstapels (38) gestapelt wird (Schritt 108);
- dass das Halbzeug (30, 30') an der Endfertigungseinrichtung (50) unter Abrollen der wenigstens einen Halbzeugrolle (34) und Unterteilen des abgerollten Halbzeugs (30, 30') in mehrere Abrollteile und/oder Entstapeln der Einzelteile (36) des wenigstens einen Einzelteilstapels (38) bereitgestellt wird (Schritt 110);
- dass das Halbzeug direkt in der Endfertigungseinrichtung (50) in einem nachgelagerten Prozesschritt, beispielsweise direkt im Umformwerkzeug (54, 56) beschnitten wird.

12. Verfahren nach einem der Ansprüche 9 bis 11,
**dadurch gekennzeichnet, dass** die Schichten (12, 14) des Mehrlagenverbunds (20) in einer Vorfertigungsvorrichtung (40) unter Wärmezufuhr (42) verbunden werden.

13. Verfahren nach Anspruch 12,
**dadurch gekennzeichnet, dass**
die Schichten (12, 14) des Mehrlagenverbunds (20) durch lokales Aufschmelzen der Deckschicht (14) miteinander verbunden werden,
und dass die wenigstens teilweise verbundenen Schichten (12, 14) des Mehrlagenverbunds (20) zu dem Halbzeug (30) vorkonfektioniert werden.

14. Verfahren nach Anspruch 12 oder 13,
**dadurch gekennzeichnet, dass** die Schichten (12, 14) des Mehrlagenverbunds (20) konduktiv und/oder konvektiv und/oder über Strahlungswärme erwärmt werden, durch welche der Mehrlagenverbund (20) hindurch befördert wird.

15. Verfahren nach Anspruch 12 oder 13,
**dadurch gekennzeichnet, dass**
die Schichten (12, 14) des aufgeheizten Mehrlagenverbunds (20) diskontinuierlich mittels eines kalten Presswerkzeugs (24) miteinander verbunden werden.

16. Verfahren nach einem der Ansprüche 9 bis 11,
**dadurch gekennzeichnet, dass**
- die Deckschicht (14) einen Faserflor (14') und/oder Faservlies umfasst;
- der Faserflor (14') und die Kernschicht (12) verbunden werden durch Einstechen zumindest einer einen Widerhaken (26) aufweisenden Nadel (24) in die Kernschicht (12) und den Faserflor (14') und anschließendes Herausführen der Nadel (24) aus der Kernschicht (12) und dem Faserflor (14'), wobei beim Einstechen und/oder Herausziehen der Nadel (24) einzelne oder mehrere Fasern des Faserflors (14') und/oder Faservlieses mit dem Widerhaken (26) verhakt und beim Einstechen und/oder Herausführen der Nadel (24) mechanisch mit der Kernschicht (12) verankert werden.

17. Verfahren nach einem der vorhergehenden Ansprüche,
**dadurch gekennzeichnet, dass**
mittels eines Anbindungswerkzeugs (56) der Endfertigungsvorrichtung (50) wenigstens ein Kunststoffelement (18) an das Sandwichbauteil (10) angebunden wird (Schritt 116).

## Claims

1. Method (100) for producing a sandwich component (10), in particular an interior trim component, for a motor vehicle, comprising the following steps:
- the provision of a core layer (12) comprising a foamed plastic material with a first melting temperature and a cover layer (14) comprising reinforcing fibres and plastic fibres with a second melting temperature, wherein the first melting temperature is higher than the second melting temperature (step 102) and wherein the plastic fibres of the cover layer (14) are substantially produced from polypropylene (PP) and the core layer (12) is produced from polyethylene terephthalate (PET);
- the placing of the core layer (12) at the cover layer (14) while forming a composite (step 104) of the layers to produce a semi-finished product (30, 30');
- the heating of the semi-finished product (30, 30') in a heating device (51) of a finishing facility (50) to a temperature that is lower than the first melting temperature and higher than the second melting temperature (step 112);
- the forming of the previously heated semi-finished product (30, 30'), decoupled in time and/or location from the actual production process of the sandwich component (10) in the provision step (102), in a forming tool (54) of the finishing facility (50) to produce the sandwich component (10) (step 114) that is lower than the first melting temperature and higher than the second melting temperature (step 112),
- wherein the cover layer (14) is consolidated in the forming process without the core layer (12) being substantially compressed or melting.

2. Method according to claim 1,
**characterised in that** a core layer that a core layer that is open-pored at least on its surface is provided as the core layer (12).

3. Method according to claim 1 or 2,
**characterised in that** the at least one cover layer (14) comprises a thermoplastic fibre-reinforced textile structure, in particular a non-woven fabric, a woven fabric or an interlaid scrim of reinforcing fibres and thermoplastic fibres with a lower melting temperature than the thermoplastic core layer (12).

4. Method according to claim 3,
**characterised in that** the at least one cover layer (14) comprises an unconsolidated hybrid non-woven fabric, in particular an unconsolidated hybrid needle felt, which is at least partially consolidated by the pressure of the press.

5. Method according to any of the preceding claims,
**characterised in that**
- the cover layer (14) comprises a melting layer (13) made of a thermoplastic material with a third melting temperature that is lower than the first melting temperature and no higher than the second melting temperature,
- wherein the melting layer (13) is placed between the core layer (12) and a fibre component (14") of the cover layer (14) when forming the multi-layer composite (20) (step 104).

6. Method according to any of the preceding claims,
**characterised in that** the melting layer (13) and the plastic fibres of the cover layer (14) consist of polypropylene (PP).

7. Method according to any of the preceding claims,
**characterised in that** an additional layer (16) with a fourth melting temperature that is higher than the second melting temperature is placed at the cover layer (14) while forming the multi-layer composite (20) (step 104).

8. Method according to any of the preceding claims,
**characterised in that** a decorative layer (17), in particular together with a further melting layer (13') made of the same thermoplastic material as the other melting layer (13), is placed at the cover layer (14) while forming the multi-layer composite (20).

9. Method according to any of the preceding claims,
**characterised in that** the semi-finished product (30, 30') is produced in the form of a continuous material and arranged in roll form (34) (step 108).

10. Method according to any of the preceding claims,
**characterised in that** the semi-finished product (30, 30') is provided in the form of made-up individual semi-finished parts (36) (step 108).

11. Method according to claim 9 or 10,
**characterised in that**
- the semi-finished product (30, 30') is rolled up to produce at least one semi-finished product roll (34) and/or made up into several individual parts (36) and stacked while forming at least one individual part stack (38) (step 108);
- the semi-finished product (30, 30') is provided at the finishing facility (50) by unrolling the at least one semi-finished product roll (34) and dividing the unrolled semi-finished product (30, 30') into several unrolled parts and/or unstacking the individual parts (36) of the at least one individual part stack (38) (step 110);
- the semi-finished product is trimmed directly in the finishing facility (50) in a downstream process step, for example directly in the forming tool (54, 56).

12. Method according to any of claims 9 to 11,
**characterised in that** the layers (12, 14) of the multi-layer composite (20) are joined in a prefabrication device (40) under heat supply (42).

13. Method according to claim 12,
**characterised in that** the layers of the multi-layer composite (20) are joined together by local fusing of the cover layer (14)
and **in that** the at least partially joined layers (12, 14) of the multi-layer composite (20) are pre-assembled to form the semi-finished product (30).

14. Method according to claim 12 or 13,
**characterised in that** the layers (12, 14) of the multi-layer composite (20) are heated conductively and/or convectively and/or by radiating heat through which the multi-layer composite (20) is conveyed.

15. Method according to claim 12 or 13,
**characterised in that** the layers (12, 14) of the heated multi-layer composite (20) are joined together discontinuously by means of a cold pressing tool (24).

16. Method according to any of claims 9 to 11
**characterised in that**
- the cover layer (14) comprises a fibre gauze (14') and/or non-woven fabric;
- the cover layer (14) and the core layer (12) are joined by stabbing at least one needle (24) having a barb (26) into the core layer (12) and the fibre gauze (14') followed by guiding the needle (24) out of the core layer (12) and the fibre gauze (14'), wherein individual or several fibres of the fibre gauze (14') and/or of the non-woven fabric are hooked to the barb (26) while the needle (24) is inserted and/or pulled out and mechanically anchored to the core layer (12) while the needle (24) is inserted and/or pulled out.

17. Method according to any of the preceding claims,
**characterised in that** at least one plastic element (18) is bound to the sandwich component (10) by means of a binding tool (56) of the finishing facility (50) (step 116).

## Revendications

1. Procédé (100) de fabrication d'un composant sandwich (10), en particulier d'une composant de revêtement intérieur pour un véhicule automobile, comprenant les étapes suivantes :
- préparer une couche centrale (12) comprenant un plastique expansé à une première température de fusion et avec une couche de recouvrement (14) qui comprend des fibres de renfort et des fibres de plastique à une deuxième température de fusion, la première température de fusion étant supérieure à la deuxième température de fusion (étape 102) et les fibres de plastique de la couche de recouvrement (14) étant fabriquées essentiellement à partir de polypropylène (PP) et la couche centrale (12) partir de polyéthylène téréphtalate (PET) ;
- disposer la couche centrale (12) sur la couche de recouvrement (14) afin de former un composite (étape 104) des couches en un demi-produit (30, 30') ;
- chauffer le demi-produit (30, 30') dans un dispositif de chauffage (52) d'un dispositif de fabrication finale (50) à une température qui est inférieure à la première température de fusion et supérieure à la deuxième température de fusion (étape 112) ;
- former le demi-produit chauffé à l'avance (30, 30') spatialement et/ou temporellement à partir du processus de fabrication du composant sandwich (10) dans l'étape de préparation (102) désolidarisé dans un outil de formage (54) du dispositif de fabrication finale (50) pour produire le composant sandwich (10) (étape 114) à une température qui est inférieure à la première température de fusion et supérieure à la deuxième température de fusion (étape 112),
- la couche de recouvrement (14) étant consolidée lors du formage sans que la couche centrale (12) ne soit sensiblement comprimée ou ne fonde.

2. Procédé selon la revendication 1,
**caractérisé en ce qu'**une couche centrale à pores ouverts sur au moins sa surface est fabriquée en tant que couche centrale (12).

3. Procédé selon la revendication 1 ou la revendication 2, **caractérisé en ce que** ladite couche de recouvrement (14) comprenant une structure plane en textile, renforcée par des fibres, thermoplastique, en particulier, un non-tissé, un tissu ou une nappe renforcée par des fibres et en fibres thermoplastiques qui présentent une température de fusion inférieure à celle de la couche centrale thermoplastique (12).

4. Procédé selon la revendication 3, **caractérisé en ce que** ladite couche de recouvrement (14) comprend un non-tissé hybride non consolidé, en particulier un non-tissé aiguillé hybride, qui est consolidé au moins à certains endroits par la pression.

5. Procédé selon l'une quelconque des revendications précédentes, **caractérisé en ce que**
- la couche de recouvrement (14) comprend une couche de fusion (13) en thermoplastique à une troisième température qui est inférieure à la première température de fusion et qui est au maximum aussi élevée que la deuxième température de fusion,
- la couche de fusion (13) lors de la formation du composite à plusieurs couches (20) (étape 104) étant disposée entre la couche centrale (12) et une proportion de fibres (14") de la couche de recouvrement (14).

6. Procédé selon l'une quelconque des revendications précédentes, **caractérisé en ce que** la couche de fusion (13) et les fibres plastiques de la couche de recouvrement (14) sont constituées de polypropylène (PP).

7. Procédé selon l'une quelconque des revendications précédentes, **caractérisé en ce qu'**une couche supplémentaire (16) à une quatrième température qui est supérieure à la deuxième température de fusion, est disposée sur la couche de recouvrement (14) afin de former le composite à plusieurs couches (20).

8. Procédé selon l'une quelconque des revendications précédentes, **caractérisé en ce qu'**une couche de décoration (17) est disposée, en particulier conjointement avec une autre couche de fusion (13') constituée du même thermoplastique que l'autre couche de fusion (13) sur la couche de recouvrement (14) afin de former le composite à plusieurs couches (20).

9. Procédé selon l'une quelconque des revendications précédentes, **caractérisé en ce que** le demi-produit (30, 30') est fabriqué sous la forme d'un matériau continu et disposé sous forme de rouleau (34) (étape 108).

10. Procédé selon l'une quelconque des revendications précédentes, **caractérisé en ce que** le demi-produit (30, 30') est préparé sous la forme de parties individuelles de demi-produit (36) confectionnées (étape 108).

11. Procédé selon la revendication 9 ou la revendication 10, **caractérisé en ce que**
- le demi-produit (30, 30') s'enroule au moins en un rouleau de demi-produit (34) et/ou est confectionné en plusieurs parties individuelles (36) et est empilé (étape 108) afin de former au moins une pile de parties individuelles (38) ;
- **en ce que** le demi-produit (30, 30') est préparé sur le dispositif de fabrication finale (50) afin de dérouler ledit rouleau de demi-produit (34) et afin de diviser le demi-produit déroulé (36) de ladite pile de parties individuelles (38) (étape 110) ;
- **en ce que** le demi-produit est découpé directement dans le dispositif de fabrication finale (50) dans une étape de processus en aval, par exemple directement dans un outil de formage (54, 56).

12. Procédé selon l'une quelconque des revendications 9 à 11, **caractérisé en ce que** les étapes (12, 14) du composite à plusieurs couches (20) sont reliées par apport de chaleur dans un dispositif de préfabrication (40).

13. Procédé selon la revendication 12, **caractérisé en ce que** les couches (12, 14) du composite à plusieurs couches (20) sont reliées entre elles par une fusion locale de la couche de recouvrement (14),
et **en ce que** les couches (12, 14) reliées au moins à certains endroits du composite à plusieurs couches (20) sont pré-confectionnées pour former le demi-produit (30).

14. Procédé selon la revendication 12 ou la revendication 13, **caractérisé en ce que** les étapes (12, 14) du composite à plusieurs couches (20) sont chauffées par conduction et/ou par conduction et/ou par une chaleur rayonnante, par laquelle est acheminé le composite à plusieurs couches (20).

15. Procédé selon la revendication 12 ou la revendication 13, **caractérisé en ce que** les couches (12, 14) du composite à plusieurs couches chauffé (20) sont reliées entre elles de manière discontinu au moyen d'un outil de presse froid (24).

16. Procédé selon l'une quelconque des revendications 9 à 11, **caractérisé en ce que**
- la couche de recouvrement (14) comprend une toile fibreuse (14') et/ou un non-tissé fibreux ;
- la toile fibreuse (14') et la couche centrale (12) sont reliées par piqûre d'au moins d'une aiguille (24) présentant un barbillon (26) dans la couche centrale (12) et dans la toile fibreuse (14') et par sortie consécutive de l'aiguille (24) de la couche centrale (12) et de la toile fibreuse (14'), lors de la piqûre et/ou de la sortie de l'aiguille (24), une seule ou plusieurs fibres de la toile fibreuse (14') et/ou du non-tissé fibreux sont accrochées au moyen du barbillon (26) et sont ancrées mécaniquement avec la couche centrale (12) lors de la piqûre et/ou de la sortie de l'aiguille (24).

17. Procédé selon l'une quelconque des revendications 9 à 11, **caractérisé en ce qu'**au moyen d'un outil de liaison (56) du dispositif de fabrication finale (50) au moins un élément en plastique (18) est lié au composant sandwich (10) (étape 116).
